# EUROPÄISCHE PATENTSCHRIFT

(11) **EP 1 312 172 B1**
(45) Veröffentlichungstag und Bekanntmachung des Hinweises auf die Patenterteilung: **19.04.2006**
(21) Anmeldenummer: 01971608.3
(22) Anmeldetag: 13.08.2001
(51) Int. Cl.: H04B 3/58, H04B 3/56

(54) **VERFAHREN ZUR ÜBERTRAGUNG VON HOCHFREQUENTEN SIGNALEN AUF NIEDERSPANNUNGSNETZEN UND ZUGEHÖRIGE ANORDNUNG**
METHOD FOR TRANSMITTING HIGH-FREQUENCY SIGNALS ON LOW-VOLTAGE NETWORKS AND CORRESPONDING SYSTEM
PROCEDE ET DISPOSITIF POUR LA TRANSMISSION DE SIGNAUX HAUTE FREQUENCE SUR DES RESEAUX BASSE TENSION

(30) Priorität: 24.08.2000 DE 10041702
(43) Veröffentlichungstag der Anmeldung: 21.05.2003
(73) Patentinhaber: SIEMENS AKTIENGESELLSCHAFT, 80333 München (DE)
(72) Erfinder: DOSTERT, Klaus, 67706 Krickenbach (DE); GRIEPENTROG, Gerd, 91468 Gutenstetten (DE); SCHMIDT, Richard, 91083 Baiersdorf (DE)
(86) Internationale Anmeldenummer: PCT/DE2001/003104
(87) Internationale Veröffentlichungsnummer: WO 2002/017509

(56) Entgegenhaltungen:
- EP-A- 0 684 681
- WO-A-01/54297
- GB-A- 2 330 455
- US-A- 3 699 272
- PATENT ABSTRACTS OF JAPAN vol. 013, no. 539 (E-853), 30. November 1989 (1989-11-30) & JP 01 221028 A (MATSUSHITA ELECTRIC IND CO LTD), 4. September 1989 (1989-09-04)

## Beschreibung

Verfahren zur Übertragung von hochfrequenten Signalen auf Niederspannungsnetzen und zugehörige Anordnung

Die Erfindung bezieht sich auf ein Verfahren zur Übertragung von hochfrequenten Signalinformationen auf Niederspannungsnetzen gemäß dem Oberbegriff des Patentanspruches 1. Daneben bezieht sich die Erfindung auch auf eine Anordnung mit Mitteln zur Durchführung des Verfahrens gemäß dem Oberbegriff des Patentanspruches 3.

In der älteren, nicht vorveröffentlichten WO 01/045297 A1 wird ein Verfahren zur Übertragung von hochfrequenten Signalen vorgeschrieben, bei dem über so genannte Router eine Datenübertragung auf einer Medium Access(MAC)-Ebene erfolgt. Dieses Verfahren beinhaltet nach Anwendung und Funktion eine andere Zielsetzung als der Anmeldungsgegenstand.

Die Datenübertragung von hochfrequenten Signalen auf Netzleitungen ist bekannt. Damit können ergänzend oder alternativ zur üblichen Telefonie Informationen übertragen werden, was insbesondere deshalb von Vorteil ist, da elektrische Netze mit Netzanschlüssen praktisch überall vorhanden sind. Insbesondere für industrielle Niederspannungsnetze mit Sammelschienensystemen und Schienenverteilern ergibt sich damit auch die Möglichkeit des Aufbaus eines eigenen Datenübertragungssystems.

Üblicherweise erfolgt die Energieversorgung in Industrieanlagen über Sammelschienensysteme, die wiederum von einem in unmittelbarer Nähe befindlichen Transformator gespeist werden. An das Sammelschienensystem sind Verbraucher über Abgangsleitungen in Form von Einzelleitungen oder Schienenverteilern angeschlossen. Schienenverteiler sind wiederum längs ausgedehnte und gekapselte massive Leiter kleineren Querschnitts, die meist in Fertigungsanlagen horizontal unter- oder oberhalb der zu versorgenden Verbraucher angebracht sind. Des Weiteren weisen Schienenverteiler in einem bestimmten Raster angeordnete Abgänge auf, an denen die Verbraucher mittels sog. Abgangskästen angeschlossen werden können.

Sammelschienensysteme und Schienenverteiler in Niederspannungsnetzen sind nachrichtentechnisch betrachtet Leiter mit sehr hohem Wellenwiderstand im Bereich von einigen 100 Ohm. Daneben stellen insbesondere die energieeinspeisenden Sammelschienensysteme mit ihren hohen prospektiven Kurzschlussströmen und sehr niedrigen Impedanzen für Signale im Frequenzbereich von 100 kHz bis einige MHz, in denen z.B. moderne Powerline-Communication (PLC)-Systeme arbeiten, niederohmige Nebenschlüsse dar. Dadurch werden die Pegel von Signalen, die direkt auf das Sammelschienensystem eingespeist werden, stark gedämpft. In Verbindung mit den in industriellen Niederspannungsnetzen auftretenden hohen Störpegeln ist bei dieser Art der Einspeisung schon nach vergleichsweise kurzen Entfernungen von einigen 10m kein gesicherter Datenverkehr mehr möglich.

Aus der EP 0 889 602 A2 ist ein Datenübertragungssystem zur Übertragung von Daten über wenigstens ein elektrisches Energiekabel bekannt, wobei die Datenein- und -ausgabe an den Endbereichen eines Energieübertragungskabels erfolgt. Weiterhin ist es aus der DE 44 18 296 A1 bekannt, Netzankopplungen zur Datenübertragung über ein elektrisches Verteilnetz mit zugehörigen Filtern an den Einkoppelstellen vorzunehmen. Schließlich ist aus der DE 19 504 587 A1 ein Zweiweg-Kommunikationssystem für Energieversorgungsnetze in einem Niederspannungsnetz bekannt, bei dem Daten übertragen werden.

Weiterhin ist aus der JP 01-221028 A ein Energieleitungs-Übertragungssystem (PLC) bekannt, das Verbraucherleitungen mit Sperrfiltern aufweist, die Strom bei Netzfrequenz (50 oder 60 Hz) zur Energieversorgung durchlassen, aber den Durchlass von hochfrequenten Signalen sperren. Zwischen den PLC-Geräten die die einzelnen Verbraucherleitungen versorgen, ist des Weiteren in einem Ausführungsbeispiel eine Logikschaltung angeordnet, die über so genannte Speziallneitungen einen digitalen Datenaustausch durchführt. In einem anderen Ausführungsbeispiel ist in einer Verteilerschalttafel ein Repeater zwischen zwei Verbrancherleitungen angeordnet. Schließlich ist aus der GB 2330455 A eine Induktor-Einrichtung bekannt, bei der ein Leiter elektrisch getrennt von einer Umhüllung aus magnetischem Material umgeben ist.

Ausgehend vom Stand der Technik ist es Aufgabe der Erfindung, die Dämpfung der Signale bei der Übertragung zu vermindern. Daneben soll eine zugehörige Anordnung zur Durchführung des Verfahrens geschaffen werden.

Die Aufgabe ist erfindungsgemäß durch die Maßnahmen des Patentanspruches 1 gelöst. Eine Anordnung zur Durchführung des Verfahrens ist im Patentanspruch 3 angegeben. Jeweils vorteilhafte Weiterbildungen sind Gegenstand der abhängigen Ansprüche.

Bei der erfindungsgemäßen Anordnung erfolgt die nachrichtentechnische Kopplung der Abgangsleitungen/Schienensysteme über eine PLC-Koppelleitung, die ggf. sog. Repeater, d.h. bidirektionale Verstärker, enthält, und die über PLC-Koppeleinheiten mit den Abgangsleitungen/Schienenverteilern verbunden sind. Die PLC-Koppeleinheiten können kapazitiv/transformatorisch aufgebaut sein, aber auch aktive Elemente wie Verstärker enthalten.

Vorteilhafterweise kann das Filter aus einer um die einzelne Ader der Zuleitung angebrachten Hülse aus magnetisierbarem Material bestehen, wobei die Hülse vorteilhaft geteilt ist, um eine leichte Applikation ohne Auftrennen der Leitung zu ermöglichen.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen
- Figur 1: eine Anordnung zur Übertragung von hochfrequenten Signalen auf industriellen Niederspannungsnetzen,
- Figur 2: eine erste Ausführungsform eines bei der Anordnung gemäß Figur 1 verwendeten Filters und
- Figur 3 und 4: zwei alternative Ausführungsformen zu Figur 2.

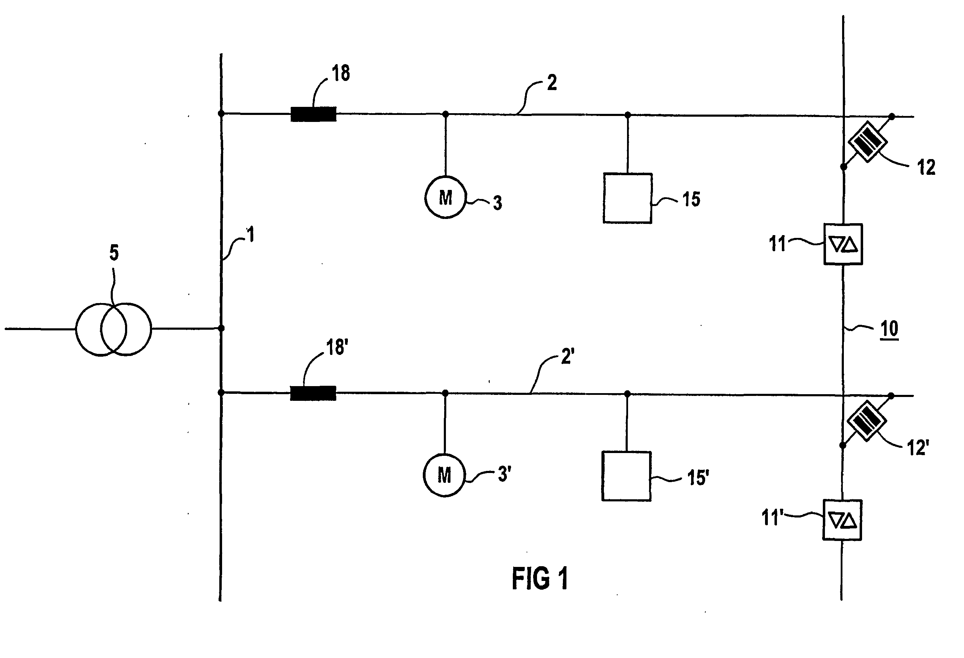

In der Figur 1 bedeutet 1 eine Sammelschiene eines industriellen Niederspannungsnetzes. Über solche Sammelschienen wird elektrische Energie zum Verbraucher übertragen. Über einen Transformator 5 erfolgt die Einspeisung der elektrischen Leistung.

Vom Sammelschienensystem gehen Abgangsleitungen oder Schienenverteiler ab. Beispielhaft sind die Schienenverteiler 2 und 2' dargestellt. Es können weitere Abgangsleitungen oder Schienenverteiler vorhanden sein.

An den Abgangsleitungen/Schienenverteilern 2, 2', ... sind einzelne Verbraucher 3, 3', ..., beispielsweise Motoren, angeschlossen.

In Figur 1 ist eine PLC-Koppelleitung an dem dem Schienensystem abgewandten Ende der Abgangsleitungen bzw. des Schienenverteilers vorhanden. In dieser Koppelleitung sind im notwendigen Abstand bidirektionale Verstärker 11, 11', ... geschaltet, die in der Praxis auch als sogenannte Repeater bezeichnet werden. Über PLC-Koppeleinheiten 12, 12', ... ist die Koppelleitung 10 mit den Abgangsleitungen 2, 2', ... bzw. den diesbezüglichen Schienenverteilern verbunden. Über die Koppeleinheiten 12, 12', ... werden die hochfrequenten Signale in die Abgangsleitungen bzw. den Schienenverteiler eingekoppelt.

Die PLC-Koppeleinheiten sind in bekannter Weise kapazitiv oder transformatorisch aufgebaut. Sie können auch weitere Elemente des Standes der Technik, wie insbesondere Verstärker enthalten.

In der Anordnung gemäß Figur 1 sind den Abgangssträngen 2,2', ... bzw. den entsprechend ausgebildeten Schienenverteilern jeweils PLC-Steuereinheiten 15, 15', ... zugeordnet. Mit diesen Steuereinheiten wird das zeitrichtige Einspeisen der Informationssignale gewährleistet.

Mit der beschriebenen Anordnung werden also die Signale auf das dem Schienensystem abgewandte Ende der Abgangsleitung bzw. des Schienenverteilers eingespeist. Zur Verhinderung eines Nebenschlusses des Sammelschienensystems und der Signal-Einspeisung ist in die Abgangsleitungen/Schienenverteiler jeweils ein Filter 20, 20', ... geschaltet. Diese Filter 18, 18', ... sind für Signale im Frequenzbereich der Powerline hochohmig, für Netzfrequenz aber niederohmig, so dass ein Nebenschluss vermieden wird.

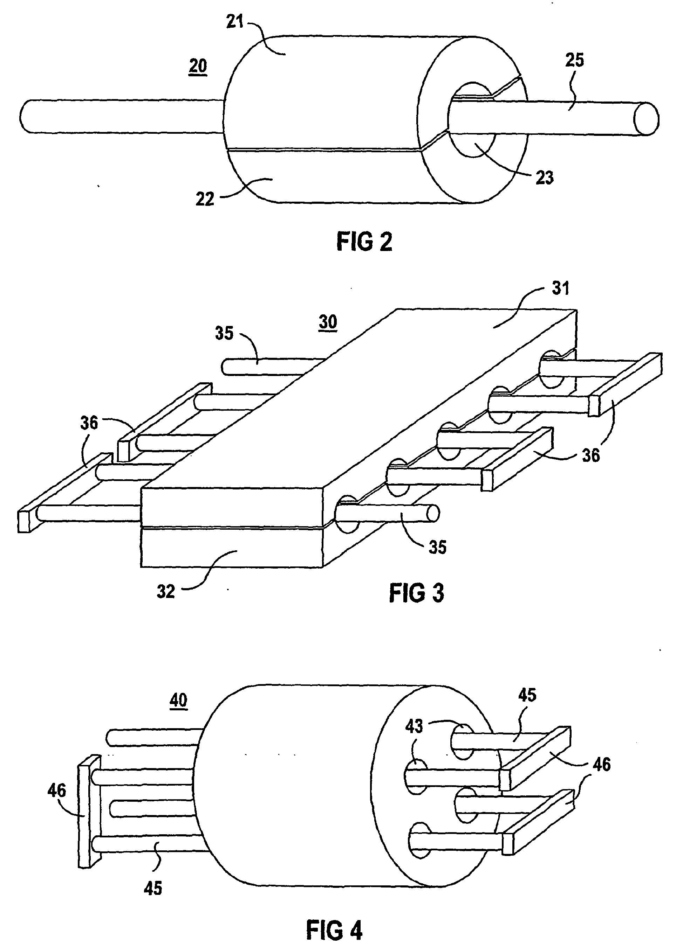

In Figur 2 ist beispielhaft der Aufbau eines solchen Filters dargestellt. Das Filter besteht aus einer zylinderförmigen Hülse 20 aus Magnetmaterial. Die Hülse 20 ist zur leichteren Applikation aus zwei Halbzylindern 21 und 22 gebildet, die zusammengefügt die zylinderförmige Hülse mit zentrischem Kanal 23 bilden, in der ein elektrischer Leiter 25 elektrisch isoliert geführt ist.

Für das Filter 18 in Figur 1 ergeben sich als Alternativen zu Figur 2 weitere Ausführungsformen. In den Figuren 3 und 4 sind diese Alternativen dargestellt: In Figur 3 umschließen zwei Platten 31 und 32 aus Magnetmaterial mit jeweils mehreren parallelen, einander gegenüberliegenden Ausnehmungen im zusammengefügten Zustand mehrere parallele Kanäle 33. Das Filter 30 bildet also eine flachen Baueinheit, in der ein massiver Leiter 35 mehrfach hin- und herführbar ist. Endseitig sind geeignete Querverbindungsstege 36 für den Leiter 35 vorhanden.

Entsprechend weist in Figur 4 ein Zylinder 40 aus Magnetmaterial mehrere parallele Längskanäle 43 zur Aufnahme eines darin hin- und hergeführten Leiters 45 mit endseitigen Querverbindungsstegen 46 auf. Die Querverbindungsstege 46 sind an den gegenüberliegenden Seiten des Zylinders 40 zueinander senkrecht orientiert, so dass das Materialvolumen des Zylinders 40 für das Filter optimal genutzt wird.

Insbesondere bei den Ausführungsformen gemäß den Figuren 3 und 4 ergeben sich als vorteilhafte Eigenschaften, dass die so gebildeten Filter kapazitätsarm sind und eine hohe Induktivität auf kleinem Raum aufweisen. Es ist keine Wicklung erforderlich, wobei die aus den Bauteilen 30 Und 40 gebildeten Filter auch mit massiven Leiterstäben für hohe Ströme realisierbar sind.

Das nachfolgende Berechnungsbeispiel speziell für das Filter gemäß Figur 1 zeigt, dass mit den angegebenen Filtern die geforderten Eigenschaften erfüllt werden. Beispielsweise sind folgende Daten für die Geometrie und das Material des Filters gegeben:
Länge 10 cm, Außen-Ø 8 cm, Innen-Ø 4 cm, µᵣ=5 10⁴, Perlenorm 5050 H4 0,1 mm.

Die Reaktanz ist abhängig von der relative Permeabilität, welche wiederum von der magnetischen Feldstärke und damit letztlich vom Strom i beeinflusst wird.

Mit diesen Daten ergibt sich für
i=0 A: Reaktanz X bei 500 kHz: 3 kΩ, X bei 50 Hz: 0,3 Ω;
i=1 A: Reaktanz X bei 500 kHz: 3 kΩ, X bei 50 Hz: 0,3 Ω;
i=10 A: Reaktanz X bei 500 kHz: 900 Ω, X bei 50 Hz: 90 mΩ;
i=100 A: Reaktanz X bei 500 kHz: 100 Ω, X bei 50 Hz: 10 mΩ;
i=1000 A: Reaktanz X bei 500 kHz: 10 Ω, X bei 50 Hz: 1 m Ω.

Vorstehendes Ergebnis bedeutet, dass abhängig von der Vormagnetisierung durch den 50 Hz-Strom die Reaktanz schwankt. Aus den obigen Werten ergibt sich, dass bei einem 50 Hz-Strom von 1 kA Scheitelwert die Reaktanz X bei 500 kHz 3 kΩ im Nulldurchgang und 10 Ω im Scheitelwert des 50 Hz-Strom beträgt. Diese Abhängigkeit muss bei der Dimensionierung berücksichtigt werden.

Bei der beschriebenen Anordnung wird für die Powerline-Signale eine Verhinderung des hochfrequenten Nebenschlusses des energiemäßig speisenden Schienensystems mittels Filter gewährleistet. In Verbindung mit der hochfrequenten Verbindung der Abgangsleitungen bzw. Schienenverteiler mittels der PLC-Koppelleitung einschließlich einer etwaigen Signalkonditionierung in den bidirektionalen Verstärkern/Repeatern wird ein Datenverkehr über längere Strecken ermöglicht.

## Patentansprüche

1. Verfahren zur Übertragung von hochfrequenten Signalen auf Niederspannungsnetzen, in denen die elektrische Energie von einer zentralen Energieeinspeisung mit Sammelschienen bereitgestellt und über Abgangsleitungen bzw. Schienenverteiler zu den Verbrauchern geleitet wird, mit Eingangspunkten für die Einspeisung von Signalen im Kilohertz(kHz)- und Megahertz(MHz)-Bereich und Abgangspunkten zur Abnahme von auf dem Leitersystem übertragenen Signalen und Energie, mit folgenden Maßnahmen zur Verbesserung des Übertragungsverhaltens:
- die Signale werden auf der der netzfrequenten Energieeinspeisung abgewandten Seite der Abgangsleitungen oder Schienenverteiler eingespeist,
- die hochfrequente Signale führenden Abgangsleitungen bzw. Schienenverteiler einschließlich ggf. notwendiger Maßnahmen zur Signalkonditionierung werden an der der Energieeinspeisung abgewandten seite mittels einer ebenfalls hochfrequente Signal führender PLC-Koppelleitung verbunden und so der Datenaustausch zwischen Verbrauchern an verschiedenen Abgangsleitungen bzw. Schienenverteilern ermöglicht.

2. Verfahren nach Anspruch 1, **dadurch gekennzeichnet, dass** durch ein für Signale im zur Kommunikation genutzten Frequenzbereich hochohmiges Filter ein Nebenschluss zwischen jeweils zwei Abgangsleitungen bzw. Schienenverteilern über die Energieeinspeisung vermieden wird.

3. Anordnung zur Durchführung des Verfahrens nach Anspruch 1 oder Anspruch 2, bei der
- auf der der Energieeinspeisung abgewandten Seite der Abgangsleitungen bzw. Schienenverteiler (2, 2', ...) Mittel (15, 15',...) zur Einspeisung der Signale vorhanden sind,
- die nachrichtentechnische Kopplung über eine hochfrequente Signale führende PLC-Koppelleitung (10) erfolgt
**dadurch gekennzeichnet, dass**
- die PLC-Koppelleitung (10) auf der der Energieeinspeisung abgewandten Seite der Abgangsleitungen oder Schienenverteiler (2, 2', ...) angeordnet ist und über PLC-Koppeleinheiten (12, 12',..) mit den Abgangsleitungen oder Schienenverteilern verbunden ist.

4. Anordnung nach Anspruch 3, **dadurch gekennzeichnet, dass** die PLC-Koppeleinheiten (12, 12', ...) kapazitiv/transformatorisch aufgebaut sind.

5. Anordnung nach Anspruch 3, **dadurch gekennzeichnet, dass** die Koppeleinheiten (12, 12', ...) aktive Elemente enthalten.

6. Anordnung nach Anspruch 5, **dadurch gekennzeichnet, dass** die aktiven Elemente Verstärker sind.

7. Anordnung nach Anspruch 3, **dadurch gekennzeichnet, dass** die Koppelleitung bidirektionale Verstärker (11, 11', ...), so genannte Repeater, enthält.

8. Anordnung nach Anspruch 3, zur Durchführung des Verfahrens nach Anspruch 2, mit einem für den Frequenzbereich der Datenleitung hochohmigen, für die Netzfrequenz dagegen niederohmigen Filter, **dadurch gekennzeichnet, dass** das Filter (20, 30, 40) aus magnetisierbarem Material besteht.

9. Anordnung nach Anspruch 8, **dadurch gekennzeichnet, dass** das Filter (20) aus einer um eine einzelne Ader (2) der Zuleitung angebrachten Hülse gebildet ist.

10. Anordnung nach Anspruch 9, **dadurch gekennzeichnet, dass** die Hülse zur leichten Applikation auf die Leitung als geteilte Hülse (21, 22) ausgebildet ist.

11. Anordnung nach Anspruch 8, **dadurch gekennzeichnet, dass** das Filter aus zwei Flachteilen (31, 32) mit parallelen Ausnehmungen aufgebaut ist, die zusammen einen Kasten (30) mit Kanälen (33) bilden, in denen ein Leiter (35) mehrfach hin- und herführbar ist.

12. Anordnung nach Anspruch 8, **dadurch gekennzeichnet, dass** das Filter aus einem Zylinder (40) mit mehren parallelen Kanälen (43) gebildet ist, in dem ein Leiter (45) mehrfach hin- und herführbar ist.

## Claims

1. Method for transmitting radio-frequency signals on low-voltage networks, in which the electrical power is provided from a central power supply by means of busbars and is passed via outgoer cables and/or distribution busbars to the loads, having input points for feeding in signals in the kilohertz (kHz) and megahertz (MHz) bands and outgoer points for tapping off signals and power which are transmitted on the conductor system, having the following features in order to improve the transmission response:
- the signals are fed in at that end of the outgoer cables or distribution busbars which is opposite the mains-frequency power feed,
- the outgoer cables or distribution busbars which carry radio-frequency signals, including any necessary measures for signal conditioning, are connected at their end which is opposite the power feed by means of a PLC coupling cable, which likewise carries radio-frequency signals and thus allows data to be interchanged between loads on various outgoer cables or distribution busbars.

2. Method according to Claim 1, **characterized in that** a short between two respective outgoer cables or distribution busbars via the power feed is prevented by means of a filter which has a high impedance for signals in the frequency band used for communication.

3. Arrangement for carrying out the method according to Claim 1 or Claim 2, in which:
- means (15, 15', ...) for feeding in the signals are provided at the opposite end of the outgoer cables or distribution busbars (2, 2', ...) to the power feed,
- the telecommunications coupling is made via a PLC coupling cable (10), which carries radio-frequency signals,
**characterized in that**
- the PLC coupling cable (10) is arranged at the opposite end of the outgoer cables or distribution busbars (2, 2', ...) to the power feed and is connected via PLC coupling units (12, 12', ...) to the outgoer cables or distribution busbars (2, 2', ...).

4. Arrangement according to Claim 3, **characterized in that** the PLC coupling units (12, 12', ...) are capacitive and/or in the form of transformers.

5. Arrangement according to Claim 3, **characterized in that** the coupling units (12, 12', ...) contain active elements.

6. Arrangement according to Claim 5, **characterized in that** the active elements are amplifiers.

7. Arrangement according to Claim 3, **characterized in that** the coupling cable contains bidirectional amplifiers (11, 11', ...), so-called repeaters.

8. Arrangement according to Claim 3, for carrying out the method according to Claim 2, having a filter which has a high impedance for the frequency band on the data line but has a low impedance for the mains frequency, **characterized in that** the filter (20, 30, 40) is composed of magnetic material.

9. Arrangement according to Claim 8, **characterized in that** the filter (20) is formed from a sleeve, which is fitted around an individual conductor (2) of the supply cable.

10. Arrangement according to Claim 9, **characterized in that** the sleeve is in the form of a split sleeve (21, 22) in order that it can be applied to the cable easily.

11. Arrangement according to Claim 8, **characterized in that** the filter is formed from two flat parts (31, 32) having parallel recesses which, together, form a box (30) with channels (33) in which a conductor (35) can be inserted and passed out more than once.

12. Arrangement according to Claim 8, **characterized in that** the filter is formed from a cylinder (40) with a number of parallel channels (43), in which a conductor (45) can be inserted and passed out more than once.

## Revendications

1. Procédé de transmission de signaux à haute fréquence sur des réseaux à basse tension, dans lesquels l'énergie électrique est fournie par une alimentation en énergie centrale avec barres collectrices et est conduite aux consommateurs par l'intermédiaire de lignes de départ ou de répartiteurs, avec des points d'entrée pour l'introduction de signaux de l'ordre des kilohertz (kHz) ou des mégahertz (MHz) et des points de départ pour le prélèvement de signaux et d'énergie transmis sur le système de conducteurs, avec les mesures suivantes pour améliorer la qualité de transmission :
- les signaux sont introduits sur le côté des lignes de départ ou des répartiteurs qui est à l'opposé de l'introduction d'énergie à la fréquence du réseau,
- les lignes de départ ou les répartiteurs conduisant des signaux à haute fréquence, y compris des dispositions éventuellement nécessaires pour le conditionnement du signal, sont reliés au côté opposé à l'introduction d'énergie au moyen d'une ligne de connexion CPL conduisant également des signaux à haute fréquence et permettent ainsi l'échange de données entre des consommateurs sur différentes lignes de départ ou répartiteurs.

2. Procédé selon la revendication 1, **caractérisé par le fait que**, avec un filtre à haute impédance pour des signaux dans la plage de fréquence utilisée pour la communication, on évite une dérivation entre à chaque fois deux lignes de départ ou répartiteurs par l'intermédiaire de l'introduction d'énergie.

3. Dispositif pour la mise en oeuvre du procédé selon la revendication 1 ou 2, dans lequel
- sur le côté des lignes de départ et répartiteurs (2, 2', ...) qui est à l'opposé de l'introduction d'énergie, des moyens (15, 15', ...) sont prévus pour l'introduction des signaux, et
- la connexion informatique s'effectue par l'intermédiaire d'une ligne de connexion CPL (10) conduisant des signaux à haute fréquence,
**caractérisé par le fait que**
- la ligne de connexion CPL (10) est agencée sur le côté des lignes de départ ou répartiteurs (2, 2', ...) qui est à l'opposé de l'introduction d'énergie et elle est reliée aux lignes de départ ou répartiteurs par l'intermédiaire d'unités de connexion CPL (12, 12', ...).

4. Dispositif selon la revendication 3, **caractérisé par le fait que** les unités de connexion CPL (12, 12', ...) ont une structure de capacité ou de transformateur.

5. Dispositif selon la revendication 3, **caractérisé par le fait que** les unités de connexion (12, 12', ...) contiennent des éléments actifs.

6. Dispositif selon la revendication 5, **caractérisé par le fait que** les éléments actifs sont des amplificateurs.

7. Dispositif selon la revendication 3, **caractérisé par le fait que** la ligne de connexion contient des amplificateurs bidirectionnels (11, 11', ...), appelés répéteurs.

8. Dispositif selon la revendication 3, pour la mise en oeuvre du procédé selon la revendication 2, avec un filtre à haute impédance pour la plage de fréquence de la ligne de données mais à basse impédance pour la fréquence du réseau, **caractérisé par le fait que** le filtre (20, 30, 40) est en un matériau magnétisable.

9. Dispositif selon la revendication 8, **caractérisé par le fait que** le filtre (20) est formé d'une gaine disposée autour d'un brin individuel (2) de la ligne d'amenée.

10. Dispositif selon la revendication 9, **caractérisé par le fait que** la gaine est conçue pour une application légère sur la ligne comme gaine fendue (21, 22).

11. Dispositif selon la revendication 8, **caractérisé par le fait que** le filtre est construit à partir de deux parties plates (31, 32) avec évidements parallèles qui forment conjointement une boîte (30) avec des canaux (33) dans lesquels un conducteur (35) peut aller et venir plusieurs fois.

12. Dispositif selon la revendication 8, **caractérisé par le fait que** le filtre est formé d'un cylindre (40) avec plusieurs canaux parallèles (43) dans lesquels un conducteur (45) peut aller et venir plusieurs fois.
